# EUROPÄISCHE PATENTSCHRIFT

(11) **EP 3 066 356 B1**
(45) Veröffentlichungstag und Bekanntmachung des Hinweises auf die Patenterteilung: **27.12.2017**
(21) Anmeldenummer: 14790042.7
(22) Anmeldetag: 22.10.2014
(51) Int. Cl.: F16D 48/00

(54) **VERFAHREN ZUR GETRIEBESCHLUPFREGELUNG UND KUPPLUNGSGETRIEBE**
METHOD FOR TRANSMISSION-SLIP CONTROL AND CLUTCH TRANSMISSION
PROCÉDÉ DE RÉGULATION DU GLISSEMENT DE TRANSMISSION ET TRANSMISSION À EMBRAYAGE

(30) Priorität: 06.11.2013 DE 102013222473
(43) Veröffentlichungstag der Anmeldung: 14.09.2016
(73) Patentinhaber: Conti Temic Microelectronic GmbH, 90411 Nürnberg (DE)
(72) Erfinder: TONN, Armin, 91154 Roth (DE); MARIGO, Christophe, F-32200 Sainte Marie (FR)
(74) Vertreter: Bonn, Roman Klemens
(86) Internationale Anmeldenummer: PCT/EP2014/072591
(87) Internationale Veröffentlichungsnummer: WO 2015/067468

(56) Entgegenhaltungen:
- EP-A1- 0 668 453
- EP-A1- 2 169 251
- EP-A2- 1 065 401

## Beschreibung

Es wird ein Kupplungsgetriebe angegeben. Darüber hinaus wird ein Verfahren zur Getriebeschlupfregelung angegeben.

In jeweils der Offenbarungen EP2169251, EP0668453 und DE 195 05 561 A1 sind ein Verfahren und eine Vorrichtung zur Schlupfregelung von Reibelementen, Getrieben oder Antriebssträngen angegeben.
Eine zu lösende Aufgabe besteht darin, ein Verfahren anzugeben, mit dem ein Schlupf mit einer hohen Genauigkeit regelbar ist.
Diese Aufgabe wird unter anderem durch ein Verfahren und durch ein Kupplungsgetriebe mit den Merkmalen der unabhängigen Patentansprüche gelöst. Bevorzugte Weiterbildungen sind Gegenstand der abhängigen Ansprüche. Gemäß zumindest einer Ausführungsform ist das Verfahren zur Getriebeschlupfregelung eingerichtet. Insbesondere lässt sich mit dem Verfahren ein Schlupf zwischen einem Motor und einem Getriebe in einem Kraftfahrzeug wie einem Auto regeln.
Gemäß zumindest einer Ausführungsform des Verfahrens wird ein Kupplungsgetriebe bereitgestellt. Bei dem Kupplungsgetriebe handelt es sich insbesondere um ein Doppelkupplungsgetriebe, das bevorzugt als Automatikgetriebe eingesetzt wird.
Gemäß zumindest einer Ausführungsform ist das Kupplungsgetriebe primärseitig an einen Motor angebunden. Der Motor umfasst hierbei ein Motorsteuergerät, englisch: engine control unit oder kurz ECU. Der Motor und/oder das Motorsteuergerät umfassen einen oder mehrere Motordrehzahlsensoren zur Messung einer Motordrehzahl.

Gemäß zumindest einer Ausführungsform ist das Kupplungsgetriebe sekundärseitig an eine Antriebswelle angebunden. Durch das Kupplungsgetriebe erfolgt eine Drehzahlanpassung vom Motor auf die Antriebswelle.

Gemäß zumindest einer Ausführungsform umfasst das Kupplungsgetriebe eine Getriebesteuerung, englisch: transmission control unit, kurz TCU.

Gemäß zumindest einer Ausführungsform wird eine Motordrehzahl, mit dem Motordrehzahlsensor gemessen, von dem Motorsteuergerät an die Getriebesteuerung übertragen. Ferner wird ein Motorzeitstempel von dem Motorsteuergerät auf die Getriebesteuerung übertragen. Der zumindest eine Motorzeitstempel wird bevorzugt in dem Motorsteuergerät generiert oder von dem Motorsteuergerät weitergeleitet.

Gemäß zumindest einer Ausführungsform umfasst das Kupplungsgetriebe und/oder die Getriebesteuerung eine oder, bevorzugt, zwei sekundärseitige Getriebedrehzahlsensoren. Insbesondere ist für jedes Teilgetriebe des Kupplungsgetriebes ein Drehzahlsensor vorgesehen.

Gemäß zumindest einer Ausführungsform erfolgt eine zeitliche Synchronisation von Messergebnissen des mindestens einen Getriebedrehzahlsensors und des zumindest einen Motordrehzahlsensors anhand des zumindest einen Motorzeitstempels, der an die Getriebesteuerung übermittelt wird. Eine Synchronisation wird dabei bevorzugt in der Getriebesteuerung durchgeführt und nicht in dem Motorsteuergerät. Bevorzugt ist es hierdurch möglich, anhand des zumindest einen Motorzeitstempels einen Sollschlupf zwischen Motor und Getriebe auf höchstens 10 U/min oder auf höchstens 20 U/min zu regeln und/oder zu bestimmen.

In mindestens einer Ausführungsform ist das Verfahren zur Getriebeschlupfregelung eines Kraftfahrzeugs eingerichtet und umfasst die folgenden Schritte, insbesondere in der angegebenen Reihenfolge:
- Bereitstellen eines Kupplungsgetriebes, das primärseitig an einen Motor mit einem Motorsteuergerät sowie mit einem Motordrehzahlsensor und sekundärseitig an eine Antriebswelle angebunden ist, wobei das Kupplungsgetriebe eine Getriebesteuerung und zumindest einen sekundärseitigen Getriebedrehzahlsensor umfasst,
- Übertragen einer von dem Motordrehzahlsensor gemessenen Motordrehzahl und zumindest eines Motorzeitstempels von dem Motorsteuergerät an die Getriebesteuerung, und
- zeitliche Synchronisation von Messergebnissen des mindestens einen Getriebedrehzahlsensors und des Motordrehzahlsensors anhand des zumindest einen Motorzeitstempels für einen Sollschlupf zwischen Motor und Getriebe von höchstens 20 U/min.

Insbesondere im Automobilmarkt hat sich als Automatikgetriebe zunehmend das Doppelkupplungsgetriebe durchgesetzt. Voraussetzung hierfür ist, dass diese Getriebe einem Kunden einen entsprechenden Fahrkomfort bieten. Grundlage hierfür ist eine funktionierende Regelung der Kupplung. Für die Regelung der Kupplung benötigt man die Drehzahlen primärseitig und sekundärseitig. Um kleine Drehzahldifferenzen, insbesondere < 10 U/min, regeln zu können, gibt es bezüglich der Erfassung der Drehzahlen entsprechend hohe Genauigkeitsanforderungen.

Im Normalfall sind daher in Getrieben mit Kupplungen jeweils ein Drehzahlsensor für die Primärseite und für die Sekundärseite der Kupplung vorhanden. Ein Doppelkupplungsgetriebe weist dann demnach drei Drehzahlsensoren auf, wobei einer der Sensoren primärseitig angebracht ist. Alternativ hierzu wird anstatt des primärseitigen, internen Drehzahlsensors des Getriebes ein Signal aus dem Motorsteuergerät verwendet, das über eine Signalleitung dem Getriebesteuergerät zugeführt wird. In der Druckschrift DE 19505561 C2 ist ein Verfahren bekannt, bei dem eine Regelung eines Kupplungsschlupfes bei wenigen Impulsen pro Umdrehung eines Drehzahlsensors erreicht wird. Jedoch ist im Regelfall etwa zur Erzielung höherer Genauigkeiten eine Sensorik mit mehr Impulsen pro Umdrehung erwünscht.

Mit dem hier beschriebenen Verfahren ist es möglich, auf den primärseitigen Motordrehzahlsensor zu verzichten und stattdessen die Motordrehzahl, die insbesondere über einen Feldbus der Getriebesteuerung zur Verfügung steht, für die Schlupfregelung zu verwenden. Hierdurch ist eine Kostenreduktion erreichbar, da in der Getriebesteuerung der primärseitige Motordrehzahlsensor und die zugehörige Auswerteelektronik einschließlich Steckverbindung entfallen können.

Es zeigt sich allerdings, dass die Regelung eines kleinen Schlupfes an der Kupplung selbst mit der internen Sensorik sehr empfindlich und anfällig auf Instabilitäten ist. Zusätzliche Totzeiten von beispielsweise 10 ms und mehr bei der Ausgabe der Signale können daher zu Instabilitäten führen. Mit dem hier beschriebenen Verfahren ist eine stabile Schlupfregelung im Bereich eines Sollschlupfes von 10 U/min und weniger möglich.

Gemäß zumindest einer Ausführungsform sind die Getriebesteuerung und das Motorsteuergerät über einen Feldbus miteinander verbunden und an einen solchen Feldbus angeschlossen. Ein Zugriff auf den Feldbus erfolgt beispielsweise mittels Arbitrierung. Bei dem Feldbus handelt es sich insbesondere um einen Bus gemäß CAN, Flexray, TTB oder MOST oder auch mit anderen Datenschnittstellen.

Gemäß zumindest einer Ausführungsform erzeugt die Getriebesteuerung einen Getriebezeitstempel. Dieser Getriebezeitstempel wird an das Motorsteuergerät gesendet. Die Sendung des Zeitstempels geschieht bevorzugt wiederholend und im Abstand von kleinen Zeitintervallen. Kleine Zeitintervalle können in diesem Zusammenhang bedeutet, dass zwei aufeinanderfolgende Getriebezeitstempel mit einem mittleren Zeitabstand von höchstens 40 ms oder 80 ms oder 20 ms oder 10 ms oder 5 ms erzeugt und/oder gesendet werden.

Gemäß zumindest einer Ausführungsform sendet das Motorsteuergerät die letzte gemessene Motordrehzahl zusammen mit dem letzten erhaltenen Getriebezeitstempel und optional auch mit dem aktuellen Motorzeitstempel an die Getriebesteuerung. Der Motorzeitstempel wird beispielsweise erzeugt, wenn die Motordrehzahl zum Senden vom Motorsteuergerät an die Getriebesteuerung bereitsteht. Alternativ hierzu ist es möglich, dass als Motorzeitstempel der zuvor erhaltene Getriebezeitstempel verwendet wird.

Gemäß zumindest einer Ausführungsform wird anhand des Motorzeitstempels und/oder des Getriebezeitstempels in der Getriebesteuerung eine mittlere Verzugszeit zwischen einem Messzeitpunkt der Motordrehzahl und einem Ankunftszeitpunkt der gesendeten Motordrehzahl an der Getriebesteuerung bestimmt. Hierdurch ist eine Synchronisation der Messergebnisse möglich. Eine Synchronisationsgenauigkeit liegt beispielsweise bei höchstens 10 ms oder 5 ms oder 2 ms oder 1 ms.

Insbesondere bei einem CAN-Bus, englisch: controller area network-Bus, erfolgt eine Datenversendnung jeweils durch nur genau ein Gerät, das an den Bus angehängt ist. Kollisionen bei einem Buszugriff verschiedener Geräte werden dabei durch Arbitrierung geregelt. Hierdurch werden hochpriorisierte, potentiell wichtigere Datenpakete bevorzugt versendet und das Versenden von weniger priorisierten, potentiell weniger ausschlaggebenden Datenpaketen wird zeitlich verzögert. Damit lässt sich etwa bei einem CAN-Bus jedoch von dem Entstehungszeitpunkt eines Datenpakets, beispielsweise der Motordrehzahl, nicht genau rückschließen, wann dieses Datenpaket tatsächlich versendet wird. Mit anderen Worten ist in diesem Fall keine genaue Zuordnung zwischen einer Versandfertigstellung eines Datenpakets und dem tatsächlichen Sendezeitpunkt gegeben. Durch das hier beschriebene Verfahren ist diese zeitliche Unsicherheit mindestens zum Teil kompensierbar und eine Synchronisation von Messwerten insbesondere des Motordrehzahlsensors und des zumindest einen Getriebedrehzahlsensors ist möglich.

Gemäß zumindest einer Ausführungsform wird vom Motorsteuergerät ein erster Motorzeitstempel erzeugt und an die Getriebesteuerung gesendet. Ferner wird ein zweiter Motorzeitstempel vom Motorsteuergerät gespeichert. Bei dem zweiten Motorzeitstempel handelt es sich um einen tatsächlichen Sendezeitpunkt des ersten Motorzeitstempels an die Getriebesteuerung.

Gemäß zumindest einer Ausführungsform wird in der Getriebesteuerung ein Getriebezeitstempel gespeichert. Bei dem Getriebezeitstempel handelt es sich um einen Empfangszeitpunkt des ersten Motorzeitstempels. Der tatsächliche Sendezeitpunkt des ersten Motorzeitstempels, also der zweite Motorzeitstempel, und der Getriebezeitstempel stimmen hierbei bevorzugt mit einer Toleranz von höchstens 10 Bit-Intervallen oder 16 Bit-Intervallen oder 5 Bit-Intervallen oder 1 Bit-Intervall überein. Die genannten Zeitpunkte sind beispielsweise definiert als ein erstes oder ein letztes Bit der entsprechenden Datenübertragung.

Bei dem Bit-Intervall handelt es sich um die Zeitdauer, in der ein Bit der Datenübertragung anliegt. Beträgt beispielsweise eine Bit-Wiederholrate 500 MHz, entsprechend 500 Mbit/s, so weist das Bit-Intervall eine Dauer von 2 µs auf.

Gemäß zumindest einer Ausführungsform wird der zweite Motorstempel, entsprechend dem Sendezeitpunkt des ersten Motorzeitstempels, an die Getriebesteuerung gesendet. Damit kann in der Getriebesteuerung eine Synchronisation der Sendezeitpunkte erfolgen, da der Getriebezeitstempel dem zweiten Motorzeitstempel entspricht. Damit lassen sich die Messzeitpunkte von Drehzahlen am Motor und am Getriebe zeitlich aufeinander abstimmen.

Gemäß zumindest einer Ausführungsform werden die Verfahrensschritte Erzeugen und Senden des ersten Motorzeitstempels, Speichern des zweiten Motorzeitstempels und des zugehörigen Getriebezeitstempels, Senden des zweiten Motorzeitstempels und Vergleichen mit dem Getriebezeitstempel, wiederholend, insbesondere kontinuierlich wiederholend durchgeführt. Das heißt, beim Senden des n-ten Motorzeitstempels wird je der n+1-te Motorzeitstempel gespeichert und dann zeitverzögert gesendet, wobei beim Senden des n+1-ten Motorzeitstempels der n+2-te Motorzeitstempel gespeichert wird und so weiter. Eine Wiederholrate des Sendens der Motorzeitstempel liegt beispielsweise bei mindestens 10 Hz oder 20 Hz und/oder bei höchstens 150 Hz oder 100 Hz oder 60 Hz.

Gemäß zumindest einer Ausführungsform handelt es sich bei dem Feldbus um einen CAN-Bus nach ISO 11898.

Gemäß zumindest einer Ausführungsform wird das Motorsteuergerät als Master gegenüber der als Slave eingesetzten Getriebesteuerung verwendet. Insbesondere kann das Motorsteuergerät dann als eine Art Taktgeber für die Getriebesteuerung angesehen werden.

Gemäß zumindest einer Ausführungsform wird mit dem Motorsteuergerät und mit dem Motordrehzahlsensor die Motordrehzahl über einen ersten Drehwinkel von 360° hinweg und bevorzugt auch über einen zweiten Drehwinkel hinweg ermittelt. Der zweite Drehwinkel liegt beispielsweise bei mindestens 90° oder 110° oder 160° und/oder bei höchstens 270° oder 200° oder 150°. Bevorzugt liegt der zweite Drehwinkel bei 180°. Mittels des zweiten Drehwinkels ist insbesondere eine Drehunförmigkeit des Motors herausmittelbar. Auch beide Drehzahlen, je gemessen über einen der Drehwinkel, werden zusammenfassend hier als Motordrehzahl bezeichnet, obwohl in diesem Fall der Begriff Motordrehzahl zwei Drehzahlen beinhaltet.

Gemäß zumindest einer Ausführungsform wird beim Messen der Motordrehzahl der Motorzeitstempel erzeugt. Ferner wird der Motorzeitstempel bevorzugt auch abgespeichert. Insbesondere entspricht der Motorzeitstempel einem Messzeitpunkt und/oder einem Berechnungszeitpunkt der Motordrehzahl, insbesondere mit einer Toleranz von höchstens 50 Bit-Intervallen oder 25 Bit-Intervallen oder 10 Bit-Intervallen. Zur Synchronisation wird der Motorzeitstempel zusammen mit der gemessenen Motordrehzahl an die Getriebesteuerung gesendet. Bevorzugt wird zusätzlich ein weiterer Zeitstempel oder eine weitere Information gesendet, bei der es sich um den tatsächlichen Sendezeitpunkt der Motordrehzahl handelt, wobei dieser den Sendezeitpunkt enthaltende Motorzeitstempel auch erst zeitverzögert, insbesondere beim Senden der nächsten, darauffolgenden Motordrehzahl, mitgesendet werden kann. Wird bei der Drehzahlmessung mit dem Getriebedrehzahlsensor ebenfalls ein Getriebezeitstempel erzeugt, ist hierdurch eine zeitliche Abstimmung der gemessenen Drehzahlen aufeinander möglich.

Gemäß zumindest einer Ausführungsform enthält ein Datenpaket, das von dem Motorsteuergerät an die Getriebesteuerung gesendet wird, die Information darüber, wann genau und/oder in welchem Zeitintervall und/oder für welche Zählimpulse des Motordrehzahlsensors die Motordrehzahl gemessen wurde. Insbesondere kann diese Information in dem Motorzeitstempel enthalten sein. Besonders bevorzugt werden in der Getriebesteuerung die Zählimpulse des oder der Getriebedrehzahlsensoren gespeichert und es wird, anhand der von dem Motorsteuergerät übermittelten Daten, die zumindest eine Getriebedrehzahl für denselben Zeitbereich ermittelt, für den die Motordrehzahl ermittelt wurde. Mit anderen Worten ist es anhand der Informationen vom Motorsteuergerät möglich, die relevanten Drehzahlen für denselben Zeitbereich oder ab demselben Zeitpunkt zu ermitteln, obwohl die Information über diesen Zeitbereich erst nachträglich an die Getriebesteuerung übermittelt wird und die Berechnung erst nachträglich erfolgt.

Gemäß zumindest einer Ausführungsform wird für eine Regelung des Schlupfes eine Sekundärdrehzahl, gemessen insbesondere mit dem mindestens einen Getriebedrehzahlsensor, durch ein Zeitglied verzögert, sodass die gemessene Sekundärdrehzahl und die gemessene Motordrehzahl eines bestimmten Zeitbereichs in der Getriebesteuerung zeitgleich vorliegen. Mit anderen Worten wird durch das Zeitglied eine Sendeverzögerung der Motordrehzahl vom Motorsteuergerät zur Getriebesteuerung simuliert und näherungsweise kompensiert. Dass die Drehzahlen zeitgleich vorliegen, bedeutet beispielsweise, dass eine zeitliche Toleranz höchstens 20m s oder 10 ms oder 5 ms oder 2,5 ms beträgt.

Gemäß zumindest einer Ausführungsform wird die Motordrehzahl mit mindestens 15 oder 20 oder 30 Impulsen pro Umdrehung gemessen. Diese Impulsanzahl liegt beispielsweise bei höchstens 50 oder 40 oder 36 Impulsen. Eine Messung der Getriebedrehzahl kann analog zur Messung der Motordrehzahl in dem Getriebedrehzahlsensor gestaltet sein.

Darüber hinaus wird ein Kupplungsgetriebe angegeben. Das Kupplungsgetriebe ist zur Durchführung eines Verfahrens nach zumindest einer der vorhergehenden Ausführungsformen eingerichtet. Merkmale des Verfahrens sind daher für das Kupplungsgetriebe offenbart und umgekehrt.

Gemäß zumindest einer Ausführungsform ist das Kupplungsgetriebe frei von einem primärseitigen Drehzahlsensor. Zur Ermittlung der primärseitigen Drehzahl dient dann als Messgerät beispielsweise ausschließlich der zumindest eine Motordrehzahlsensor.

Nachfolgend werden ein hier beschriebenes Verfahren und ein hier beschriebenes Kupplungsgetriebe unter Bezugnahme auf die Zeichnung anhand von Ausführungsbeispielen näher erläutert. Gleiche Bezugszeichen geben dabei gleiche Elemente in den einzelnen Figuren an. Es sind dabei jedoch keine maßstäblichen Bezüge dargestellt, vielmehr können einzelne Elemente zum besseren Verständnis übertrieben groß dargestellt sein.

Es zeigen:
- Figur 1: eine schematische Darstellung einer Abwandlung eines Kupplungsgetriebes,
- Figur 2: eine schematische Darstellung eines hier beschriebenen Kupplungsgetriebes, und
- Figuren 3 bis 5: schematische Darstellungen von hier beschriebenen Verfahren.

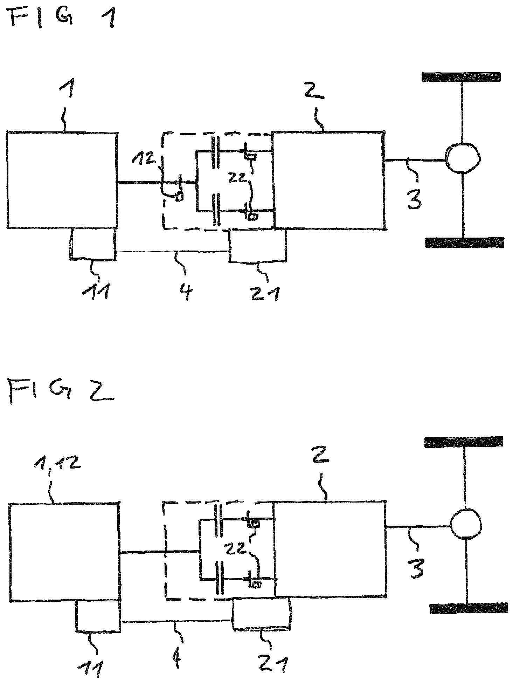

In Figur 1 ist schematisch eine Abwandlung eines Kraftfahrzeugantriebs gezeigt. Ein Motor 1 ist an ein Doppelkupplungsgetriebe 2 gekoppelt, das wiederum an eine Antriebswelle 3 gekoppelt ist. Das Getriebe 2 umfasst primärseitig einen Motordrehzahlsensor 12 und sekundärseitig zwei Getriebedrehzahlsensoren 22. Alle drei Drehzahlsensoren 12, 22 liefern Daten an eine Getriebesteuerung 21.

In Figur 2 ist schematisch ein Antrieb eines Kraftfahrzeugs, etwa eines Autos, mit einem erfindungsgemäßen Kupplungsgetriebe 2 dargestellt. Der Motor 1 weist ein Motorsteuergerät 11 sowie den Motordrehzahlsensor 12 auf. Es ist möglich, dass der Motordrehzahlsensor 12 die Motordrehzahl vor einem Zweimassenschwungrad misst. Über eine Welle ist der Motor 1 mechanisch an das Kupplungsgetriebe 2, insbesondere ein Doppelkupplungsgetriebe zur Automatiksteuerung, angebunden. Das Kupplungsgetriebe 2 weist die Getriebesteuerung 21 und zwei Getriebedrehzahlsensoren 22, insbesondere sekundärseitig, auf. Primärseitig, also motorseitig, ist das Getriebe 2 frei von einem Motordrehzahlsensor. Es ist also, im Vergleich zur Anordnung gemäß Figur 1, ein Drehzahlsensor einsparbar.

An Räder des Kraftfahrzeugs ist das Kupplungsgetriebe 2 über die Antriebswelle 3 mechanisch angebunden. Eine Datenverbindung zwischen der Getriebesteuerung 21 und dem Motorsteuergerät 11 ist über einen Feldbus 4, insbesondere einen CAN-Bus, realisiert.

Bevorzugt werden von dem Motordrehzahlsensor 12 und dem Getriebedrehzahlsensor 22 die jeweiligen Drehzahlen, also die Motordrehzahl sowie die Getriebedrehzahl, auf die gleiche Weise ermittelt. Dazu werden mit Hilfe des Motorsteuergeräts 11 zwei Motordrehzahlen jeweils über 360° und beispielsweise über 180° ermittelt.

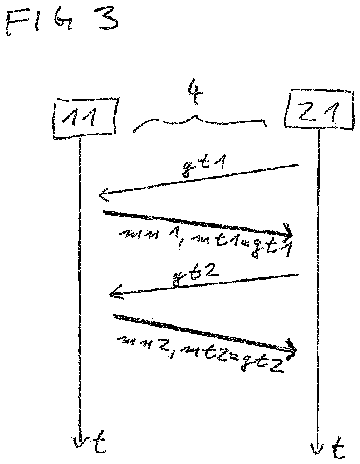

In Figur 3 ist ein Verfahren zur Getriebeschlupfregelung mithilfe von Zeitachsen t schematisch dargestellt. Von der Getriebesteuerung 21 wird ein Getriebezeitstempel gt1 an das Motorsteuergerät 11 gesandt. Im Motorsteuergerät 11 werden die Drehzahlen über 360° und etwa über 180°, verkürzt im Folgenden einfach bezeichnet als Motordrehzahl mn1, mn2 ermittelt. Diese Motordrehzahl mn1 wird nachfolgend zusammen mit dem letzten, zuvor erhaltenen Getriebezeitstempel gt1 an die Getriebesteuerung 21 übermittelt. Alternativ ist es möglich, dass ein weiterer Motorzeitstempel gesendet wird, anders als dargestellt.

Damit lässt sich eine mittlere Verzugszeit für die Bereitstellung und die Übertragung der Motordrehzahlen mn1, mn2 zur Getriebesteuerung 21 berechnen. Da beide Steuergeräte 11, 21 asynchron laufen, ist diese Zeit im Betrieb variabel und daher laufend zu ermitteln. Über das laufende Senden und Rücksenden von Getriebezeitstempeln gt1, gt2, die den Motorzeitstempeln mt1, mt2 entsprechen können, ist eine weitgehende Synchronisierung der Messungen und/oder der Auswertungen der Messungen der Motordrehzahl und der Getriebedrehzahl möglich.

Bei Motoren 1 mit anderen Zylinderzahlen als vier sind auch noch andere zweite, von 180° verschiedene Winkel wie zum Beispiel 360° und 120° möglich. Durch die Wahl der Winkel ist eine Drehunförmigkeit des Motors herausmittelbar. Im Getriebesteuergerät werden die Drehzahlen für die Sekundärseite des Kupplungsgetriebes 2 nach dem gleichen Verfahren ermittelt.

Mit anderen Worten wird also bei der Kupplungsschlupfregelung ein zeitlicher Versatz etwa durch die CAN-Übertragung berücksichtigt und eine verbesserte Abstimmung von Drehzahlmessdaten aufeinander ist möglich.

Wie auch in allen anderen Ausführungsbeispielen ist es möglich, dass für die Regelung in der Getriebesteuerung 21 die wenigstens eine Sekundärdrehzahl, gemessen durch den mindestens einen Getriebedrehzahlsensor 22, durch ein Zeitglied verzögert wird, damit annähernd gleiche Abtastzeitpunkte zur Regelung des Schlupfes vorliegen.

Für die Regelung des Schlupfes ist beispielsweise ein PI-Regler, optional mit D-Anteil, verwendbar. Um Totzeiten ausgleichen zu können, kann ein Kaskadenregler, insbesondere ein Drehzahlregler mit unterlagertem Gradientenregler, verwendet werden. Ebenso ist auch ein Zustandsregler mit Beobachter verwendbar. Ein Drehzahlgradient wird bevorzugt jeweils aus einem Vergleich der Drehzahlen bei den beiden Drehwinkeln ermittelt. Regelparameter sind bevorzugt auch von einer Verzugszeit abhängig.

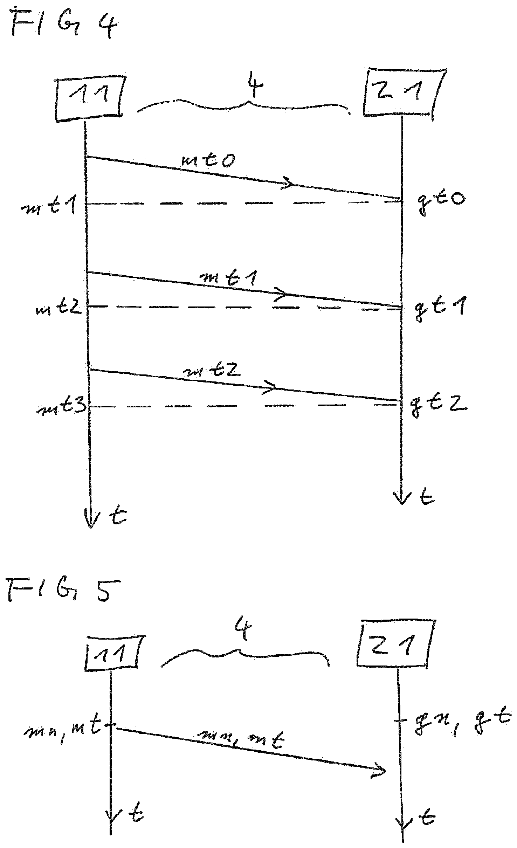

Beim Verfahren, wie in Figur 4 dargestellt, ist zur Vereinfachung lediglich eine Synchronisation illustriert. Das Senden der Motordrehzahl ist nicht eigens dargestellt.

Beim Verfahren gemäß Figur 4 wird ein erster Motorzeitstempel mt0 erzeugt und vom Motorsteuergerät 11 an die Getriebesteuerung 21 übersendet. Als zweiter Motorzeitstempel mt1 wird der tatsächliche Sendezeitpunkt des ersten Motorstempels mt0 abgespeichert. Dieser zweite Motorzeitstempel mt1 stimmt mit einem Empfangszeitpunkt, gespeichert als der Getriebezeitstempel gt0, überein. Nachfolgend wird der zuvor gespeicherte zweite Motorzeitstempel mt1 an die Getriebesteuerung 21 gesendet.

Bevorzugt wird zwischen zwei aufeinander folgenden Sendungen der Motorzeitstempel mt0, mt1, mt2 jeweils die Motordrehzahl mn gemessen und es wird eine Zeitbereich, in dem die Motordrehzahl mn gemessen wurde, abgespeichert. Diese Informationen, also die jeweilige Motordrehzahl mn sowie der zugehörige Zeitbereich, werden dann beispielsweise zusammen mit dem Motorzeitstempel mt1, mt2 und so weiter an die Getriebesteuerung 21 gesendet. Anstelle des Zeitbereichs für die Motordrehzahlmessung ist es möglich, nur einen Messstartzeitpunkt oder einen Messendzeitpunkt der Messung der Motordrehzahl mn zu übermitteln.

In den Getriebedrehzahlsensoren 22 wird die Drehzahl zum Beispiel über 360° und 180° bestimmt, wobei pro Umdrehung zum beispiel 30 Zählimpulse generiert werden. Die einzelnen Zählimpulse werden gespeichert. Durch die Übermittlung des Zeitbereichs, in dem die Motordrehzahl mn gemessen wurde, können dann anhand der gespeicherten Daten der Zählimpulse die sekundärseitigen Getriebedrehzahlen gn im Nachhinein für denselben Zeitbereich, oder ab demselben Messstartzeitpunkt oder vor demselben Messendzeitpunkt, bestimmt werden. Es ist also möglich, trotz der Zeitverzögerung beim Senden der Motordrehzahl im Nachhinein die mindestens eine sekundärseitige Getriebedrehzahl für dasselbe Zeitfenster zu berechnen. Entsprechendes kann auch bei allen anderen Ausführungsbeispielen gelten.

Hierdurch kann der zweite Motorzeitstempel mt1, der gleich dem Empfangszeitpunkt im Getriebezeitstempel gt0 ist, zur Synchronisation verwendet werden. Insbesondere ist jeweils ein zeitlicher Versatz zwischen dem Erstellen des Motorzeitstempels und dem Senden des entsprechenden Motorzeitstempels ermittelbar. Diese Prozedur wird kontinuierlich wiederholt. Beispielsweise liegt ein zeitlicher Abstand des Erzeugens zweier aufeinander folgender Motorzeitstempel mt0, mt1, mt2 und so weiter bei 40 ms, entsprechend einer Wiederholrate von 25 Hz.

Beim Ausführungsbeispiel gemäß Figur 4 fungiert die Getriebesteuerung 21 bevorzugt als Slave relativ zu dem als Master eingesetzten Motorsteuergerät 11.

Ein absoluter Zeitunterschied zwischen den Zeitstempeln mt1, gt0 liegt bevorzugt bei weniger als 1 Bit-Intervall. Insbesondere ist der Zeitunterschied kleiner als eine Propagationszeit des Signals von dem Motorsteuergerät 11 zu der Getriebesteuerung 21, also beispielsweise kleiner als 1 µs. Durch interne Vorgänge wie eine Abspeicherung oder eine Aufarbeitung der Empfangszeiten ist es möglich, dass ein zusätzlicher, kleiner Fehler, etwa weniger als 10 µs, hinzukommt.

Bei dem ersten Zeitstempel mt0 handelt es sich bevorzugt um eine logische 0. Insbesondere ist es möglich, dass das Motorsteuergerät 11 mit einem 32-Bit-Timer arbeitet, bei einer zeitlichen Auflösung von 1 Bit entsprechend 50 ns. Damit erfolgt ein Timer-Überlauf dann bei über 200 s. Entsprechend ist es möglich, dass die dargestellte Sequenz jeweils nach oder kurz vor einem Timer-Überlauf neu gestartet wird mit mt0 = 0.

Beim Verfahren gemäß Figur 5 wird ein Motorzeitstempel mt beim Messen der Motordrehzahl mn erzeugt und gespeichert und beide Daten werden an die Getriebesteuerung 21 übermittelt. In der Getriebesteuerung 21 erfolgt ein Vergleich mit einer Getriebedrehzahl gn, unter Berücksichtigung des zugehörigen Getriebezeitstempels gt, bei dem die Getriebedrehzahl gn gemessen wird.

Die hier beschriebene Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

### Bezugszeichenliste

- 1: Motor
- 11: Motorsteuergerät
- 12: Motordrehzahlsensor
- 2: Kupplungsgetriebe
- 21: Getriebesteuerung
- 22: Getriebedrehzahlsensor
- 3: Antriebswelle
- 4: Feldbus

- gt: Getriebezeitstempel
- mn: Motordrehzahl
- mt: Motorzeitstempel
- t: Zeit

## Patentansprüche

1. Verfahren zur Getriebeschlupfregelung eines Kraftfahrzeugs mit den Schritten:
- Bereitstellen eines Kupplungsgetriebes (2), das primärseitig an einen Motor (1) mit einem Motorsteuergerät (11) sowie mit einem Motordrehzahlsensor (12) und sekundärseitig an eine Antriebswelle (3) angebunden ist, wobei das Kupplungsgetriebe (2) eine Getriebesteuerung (21) und zumindest einen sekundärseitigen Getriebedrehzahlsensor (22) umfasst,
- Übertragen einer von dem Motordrehzahlsensor (12) gemessenen Motordrehzahl (mn) und zumindest eines Motorzeitstempels von dem Motorsteuergerät (11) an die Getriebesteuerung (21), und
- zeitliche Synchronisation von Messergebnissen des mindestens einen Getriebedrehzahlsensors (22) und des Motordrehzahlsensors (12) anhand des zumindest einen Motorzeitstempels für einen Sollschlupf zwischen Motor (1) und Getriebe (2) von höchstens 20 U/min, **dadurch gekennzeichnet, dass** für die Synchronisierung
- vom Motorsteuergerät (11) ein erster Motorzeitstempel erzeugt und an die Getriebesteuerung (21) gesendet wird,
- ein zweiter Motorzeitstempel vom Motorsteuergerät (11) gespeichert wird, wobei der zweite Motorzeitstempel ein tatsächlicher Sendezeitpunkt des ersten Motorzeitstempels ist,
- die Getriebesteuerung (21) einen Getriebezeitstempel speichert, der ein Empfangszeitpunkt des ersten Motorzeitstempels ist, und
- der zweite Motorzeitstempel an die Getriebesteuerung (21) gesendet wird, wobei der Empfangszeitpunkt gleich dem zweiten Motorzeitstempel ist, mit einer Toleranz von höchstens einem Bitintervall.

2. Verfahren nach dem vorhergehenden Anspruch,
wobei
- das Kupplungsgetriebe (2) ein Doppelkupplungsgetriebe als Automatikgetriebe ist,
- die Getriebesteuerung (21) und das Motorsteuergerät (11) an einen Feldbus (4) angeschlossen sind,
- ein Zugriff auf den Feldbus (4) mittels Arbitrierung geregelt ist,
- von dem Motorsteuergerät (11) in oder zu dem Motorzeitstempel Informationen darüber gesendet werden, ab wann und/oder bis wann und/oder von wann bis wann die Motordrehzahl (mn) gemessen wurde, und
- in der Getriebesteuerung (21) nachfolgend anhand des zuvor übermittelten Motorzeitstempels mindestens eine sekundärseitige Getriebedrehzahl (gn) für denselben Zeitbereich berechnet wird, in dem die Motordrehzahl (mn) bestimmt wurde.

3. Verfahren nach dem vorhergehenden Anspruch,
bei dem die Verfahrensschritte gemäß Anspruch 2 kontinuierlich wiederholt werden,
wobei eine Wiederholrate zwischen einschließlich 10 Hz und 150 Hz liegt.

4. Verfahren nach einem der vorhergehenden Ansprüche,
wobei der Feldbus (4) ein CAN-Bus nach ISO 11898 ist, und
wobei das Motorsteuergerät (11) als Master gegenüber der als Slave eingesetzten Getriebesteuerung (21) verwendet wird.

5. Verfahren nach einem der vorhergehenden Ansprüche,
wobei mit dem Motorsteuergerät (11) und mit dem Motordrehzahlsensor (12) die Motordrehzahl über einen ersten Drehwinkel von 360° hinweg und über einen zweiten Drehwinkel zwischen einschließlich 90° und 270° hinweg ermittelt wird, um eine Drehunförmigkeit des Motors (1) herauszumitteln, und
wobei die Motordrehzahl mit zwischen einschließlich 25 und 40 Impulsen pro Umdrehung gemessen wird, ebenso wie die sekundärseitige Getriebedrehzahl.

6. Verfahren nach einem der vorhergehenden Ansprüche,
bei dem beim Messen der Motordrehzahl der Motorzeitstempel erzeugt wird und der Motorzeitstempel gleich einem Messzeitpunkt der Motordrehzahl ist, mit einer Toleranz von höchstens 10 Bitintervallen, wobei der Motorzeitstempel zusammen mit der gemessenen Motordrehzahl an die Getriebesteuerung (21) gesendet wird.

7. Verfahren nach einem der vorhergehenden Ansprüche,
bei dem für eine Regelung des Schlupfes eine Sekundärdrehzahl durch ein Zeitglied verzögert wird, sodass die Sekundärdrehzahl und die Motordrehzahl eines bestimmten Zeitbereichs in der Getriebesteuerung (21) zeitgleich vorliegen, mit einer Toleranz von höchstens 5 ms.

8. Kupplungsgetriebe (2), das zur Durchführung eines Verfahrens nach einem der vorhergehenden Ansprüche eingerichtet ist,
wobei das Kupplungsgetriebe (2) frei ist von einem primärseitigen Drehzahlsensor.

## Claims

1. Method for transmission-slip control of a motor vehicle, comprising the steps:
- making available a transmission (2) which is connected on the primary side to an engine (1) with an engine control device (11) and to an engine rotational speed sensor (12), and is connected on the secondary side to a drive shaft (3), wherein the transmission (2) comprises a transmission controller (21) and at least one secondary-side transmission rotational speed sensor (22),
- transmitting an engine rotational speed (mn) measured by the engine rotational speed sensor (12), and at least one engine timestamp from the engine control device (11) to the transmission controller (21), and
- synchronization of measurement results of the at least one transmission rotational speed sensor (22) and of the engine rotational speed sensor (12) on the basis of the at least one engine timestamp for a setpoint slip between the engine (1) and the transmission (2) of a maximum 20 rpm, **characterized in that**, for the synchronization
- the engine control device (11) generates a first engine timestamp and transmits it to the transmission controller (21),
- a second engine timestamp is stored by the engine control device (11), wherein the second engine timestamp is an actual transmission time of the first engine timestamp,
- the transmission controller (21) stores a transmission timestamp which is a reception time of the first engine timestamp, and
- the second engine timestamp is transmitted to the transmission controller (21), wherein the reception time is equal to the second engine timestamp, with a tolerance of a maximum one bit interval.

2. Method according to the preceding claim,
wherein
- the transmission (2) is a dual transmission as an automatic transmission,
- the transmission controller (21) and the engine control device (11) are connected to a field bus (4),
- access to the field bus (4) is regulated by means of arbitration,
- information about the time from which and/or the time until when and/or the time from which until when the engine rotational speed (mn) has been measured is transmitted by the engine control device (11) in or with respect to the engine timestamp, and
- subsequently, at least one secondary-side transmission rotational speed (gn) for the same time range in which the engine rotational speed (mn) has been determined is calculated in the transmission controller (21) on the basis of the previously determined engine timestamp.

3. Method according to the preceding claim,
in which the method steps according to Claim 2 are repeated continuously,
wherein a repetition rate is between inclusively 10 Hz and 150 Hz.

4. Method according to one of the preceding claims,
wherein the field bus (4) is a CAN bus according to ISO 11898,
and
wherein the engine control device (11) is used as a master with respect to the transmission controller (21) which is used as a slave.

5. Method according to one of the preceding claims,
wherein the engine rotational speed is determined over a first rotational angle of 360° and over a second rotational angle between inclusively 90° and 270° with the engine control device (11) and the engine rotational speed sensor (12), in order to extract a rotational irregularity of the engine (1), and
wherein the engine rotational speed is measured with between inclusively 25 and 40 pulses per revolution, as is the secondary-side transmission rotational speed.

6. Method according to one of the preceding claims,
in which when the engine rotational speed is measured the engine timestamp is generated and the engine timestamp is equal to a measuring time of the engine rotational speed, with a tolerance of a maximum 10 bit intervals,
wherein the engine timestamp is transmitted together with the measured engine rotational speed to the transmission controller (21).

7. Method according to one of the preceding claims,
in which a secondary rotational speed is delayed by a timing element for the control of a slip, with the result that the secondary rotational speed and the engine rotational speed of a specific time range are present simultaneously in the transmission controller (21), with a tolerance of a maximum 5 ms.

8. Transmission (2), which is configured to carry out a method according to one of the preceding claims,
wherein the transmission (2) is free of a primary-side rotational speed sensor.

## Revendications

1. Procédé de régulation du glissement de transmission d'un véhicule automobile, comprenant les étapes suivantes:
- fourniture d'une transmission à embrayage (2), qui est connectée côté primaire à un moteur (1) avec un appareil de commande du moteur (11) ainsi qu'avec un capteur du nombre de tours du moteur (12) et côté secondaire à un arbre d'entraînement (3), dans lequel la transmission à embrayage (2) comprend une commande de la transmission (21) et au moins un capteur du nombre de tours de la transmission (22) côté secondaire,
- transmission d'un nombre de tours (mn) mesuré par le capteur du nombre de tours du moteur (12) et d'au moins une marque temporelle du moteur de l'appareil de commande du moteur (11) à la commande de la transmission (21), et
- synchronisation temporelle de résultats de mesure dudit au moins un capteur du nombre de tours de la transmission (22) et du capteur du nombre de tours du moteur (12) à l'aide d'au moins une marque temporelle du moteur pour un glissement théorique entre le moteur (1) et la transmission (2) de 20 tr/min au maximum, **caractérisé en ce que** pour la synchronisation
- on produit une première marque temporelle du moteur au moyen de l'appareil de commande du moteur (11) et on l'envoie à la commande de la transmission (21),
- on mémorise une deuxième marque temporelle du moteur par l'appareil de commande du moteur (11), dans lequel la deuxième marque temporelle du moteur est un instant réel d'émission de la première marque temporelle du moteur,
- la commande de la transmission (21) mémorise une marque temporelle de la transmission, qui est un instant de réception de la première marque temporelle du moteur, et
- on envoie la deuxième marque temporelle du moteur à la commande de la transmission (21), dans lequel l'instant de réception est identique à la deuxième marque temporelle du moteur, avec une tolérance d'un intervalle de bits.

2. Procédé selon la revendication précédente, dans lequel
- la transmission à embrayage (2) est une transmission à double embrayage comme transmission automatique,
- la commande de la transmission (21) et l'appareil de commande du moteur (11) sont raccordés à un bus de champ (4),
- un accès au bus de champ (4) est réglé par arbitrage,
- on envoie de l'appareil de commande du moteur (11), dans ou avec la marque temporelle du moteur, des informations indiquant à partir de quand et/ou jusque quand et/ou de quand à quand le nombre de tours du moteur (mn) a été mesuré, et
- on calcule ensuite dans la commande de la transmission (21), à l'aide de la marque temporelle transmise au préalable, au moins un nombre de tours de la transmission côté secondaire (gn) pour la même période de temps, dans laquelle le nombre de tours du moteur (mn) a été déterminé.

3. Procédé selon la revendication précédente, dans lequel on répète de façon continue les étapes de procédé selon la revendication 2, dans lequel une fréquence de répétition se situe entre 10 Hz et 150 Hz, ces valeurs comprises.

4. Procédé selon l'une quelconque des revendications précédentes, dans lequel le bus de champ (4) est un bus CAN selon ISO 11898, et dans lequel on utilise l'appareil de commande du moteur (11) comme maître par rapport à la commande de la transmission (21) utilisée comme esclave.

5. Procédé selon l'une quelconque des revendications précédentes, dans lequel on détermine avec l'appareil de commande du moteur (11) et avec le capteur du nombre de tours du moteur (12) le nombre de tours du moteur pendant un premier angle de rotation de 360° et pendant un deuxième angle de rotation entre 90° et 270°, ces valeurs comprises, afin de faire apparaître une irrégularité de rotation du moteur (1), et dans lequel on mesure le nombre de tours du moteur avec entre 25 et 40 impulsions par tour, ces valeurs comprises, exactement comme le nombre de tours de la transmission côté secondaire.

6. Procédé selon l'une quelconque des revendications précédentes, dans lequel on produit la marque temporelle du moteur lors de la mesure du nombre de tours du moteur et la marque temporelle du moteur est identique à un instant de mesure du nombre de tours du moteur, avec une tolérance de 10 intervalles de bits au maximum, dans lequel on envoie la marque temporelle du moteur en même temps que le nombre de tours mesuré du moteur à la commande de la transmission (21).

7. Procédé selon l'une quelconque des revendications précédentes, dans lequel on retarde un nombre de tours secondaire au moyen d'un élément de temps pour une régulation du glissement, de telle manière que le nombre de tours secondaire et le nombre de tours du moteur d'une période de temps déterminée se trouvent en même temps dans la commande de la transmission (21), avec une tolérance de 5 ms au maximum.

8. Transmission à embrayage (2), qui est conçue pour la mise en oeuvre d'un procédé selon l'une quelconque des revendications précédentes, dans lequel la transmission à embrayage (2) est dépourvue d'un capteur du nombre de tours côté primaire.
